# EUROPEAN PATENT APPLICATION

(11) **EP 4 483 990 A1**
(43) Date of publication of application: **01.01.2025**
(21) Application number: 22934463.5
(22) Date of filing: 27.04.2022
(51) Int. Cl.: B01D 53/62, C25B 1/23

(54) **CARBON DIOXIDE CAPTURE METHOD AND SYSTEM CAPABLE OF CO-PRODUCING CARBON MONOXIDE AND HYDROGEN**

(30) Priority: 28.03.2022 CN 202210311730
(71) Applicant: Xeca Turbo Technologies (beijing) Co., Ltd., Beijing 100012 (CN)
(72) Inventor: LV, Xijia, Beijing 102209 (CN); ZHAO, Tu, Beijing 102209 (CN); ZHANG, Hao, Beijing 102209 (CN); ZHANG, Junwei, Beijing 102209 (CN)
(74) Representative: Murgitroyd & Company
(86) International application number: PCT/CN2022/089581
(87) International publication number: WO 2023/184637

(57) **Abstract**

Disclosed are a carbon dioxide capturing method and system for co-producing of carbon monoxide and hydrogen, which includes: capturing, by an alkaline solution, carbon dioxide in a target component, to obtain an aqueous solution containing carbonate; performing, on the aqueous solution containing the carbonate, a first electrolytic process, to obtain an aqueous solution containing bicarbonate and hydrogen; and performing, on the aqueous solution containing the bicarbonate in the presence of a catalyst, a second electrolytic process, to obtain the carbon monoxide and the hydrogen, where the catalyst is selected as at least one component from a group consisting of an elementary substance of metal, alloy and compound of group VIII, group IB, group IIB, group IVA and lanthanide. The above-mentioned method is not only capable of making the captured carbon dioxide be consumed and utilized in a form of a synthesis gas, to further broaden an application field of resource utilization of carbon dioxide, but also making a portion of carbonate in carbonate aqueous solution be converted to bicarbonate before the first electrolysis process, so that power consumption and process cost is greatly reduced.

## Description

### CROSS-REFERENCE TO RELATED APPLICATIONS

The present application claims priority to the Chinese Patent Application 202210311730.8, filed on March 28, 2022, and the contents of the aforementioned application are hereby incorporated by reference in their entireties.

### TECHNICAL FIELD

The present invention relates to the field of carbon dioxide capture technologies, and in particular, to a carbon dioxide capturing method and system for co-producing of carbon monoxide and hydrogen.

### BACKGROUND

At present, a chemical absorption method using liquid alcohol amine as a carbon dioxide (CO₂) absorbent has advantages of a high absorption rate and a simple process flow, and is one of the most studied and widely used technologies for capturing the CO₂ at present. However, in a regeneration process of an alcohol amine absorbent, a certain quantity of latent heat of vaporization of water needs to be absorbed, so that it is necessary to use a large quantity of steam, and thus energy consumption is high. Moreover, an alcohol amine solvent will degrade to a certain extent during a use process, resulting in loss of amine and operation cost is increased.

In order to solve a problem of high energy consumption of using a liquid alcohol amine solvent, capturing the CO₂ by using a solid adsorption (also called an absorbent) gradually has become a research hotspot gradually. In a regeneration process of this kind of adsorption (also called an absorbent), a large quantity of the latent heat of the vaporization of the water is avoided, and the energy consumption is mainly sensible heat of temperature rise of materials in the regeneration process and chemical reaction heat needed in the regeneration process, so that the energy consumption of the regeneration is greatly reduced. However, on one hand, this method has a higher requirement for the solid adsorption (also called the absorbent), that is, the used adsorption (also called the absorbent) is required to have both a better adsorption performance and thermal stability, and thus the adsorption (also called the absorbent) with the better performance is generally more expensive, resulting in higher initial investment cost. On the other hand, it is necessary to develop a process device and a process flow which match with the method. Moreover, a device for related adsorption and regeneration is mainly a fluidized bed generally, which will inevitably cause material wear in the operation process, so that a certain quantity of loss of the adsorption/absorbent is caused, and thus an operation cost is increased. Therefore, there is no report of relatively mature industrial application yet.

Capturing the CO₂ capture by using an inorganic alkaline solution as an absorbent is cheaper than that of the solid adsorption/absorbent. Meanwhile, after a carbonate is obtained by absorbing the CO₂ with an inorganic alkali, the inorganic alkali may generally be regenerated by reacting with Ca(OH)₂. Compared with the chemical absorption method with the alcohol amine solvent as the absorbent, this method avoids the large quantity of the latent heat of the vaporization of the water in the regeneration process. However, the Ca(OH)₂ used in the regeneration process converts to CaCO₃, the CaCO₃ is calcined to convert to CaO, and the CaO reacts with H₂O to realize the regeneration of the Ca(OH)₂, a system using this method is relatively complex. In addition, a calcination process of the CaCO₃ will increase energy consumption, and consumption of a calcined fuel will lead to emission of the CO₂, so that there is no advantage in terms of investment cost and operation cost. Therefore, how to reduce the cost of the CO₂ capture is the main hotspot of research at the present stage. In addition, resource utilization of the CO₂ is another research hotspot at the present stage. A final product obtained by the mainstream carbon capture technology in the market is still mainly the CO₂, so that a utilization form of carbon element is single. Although chemicals such as methanol and olefin and the like made of the CO₂ may be synthesized from the captured CO₂, types and production capacity of the chemicals synthesized by the CO₂ as a raw material are limited. Therefore, it is an important research direction that how to further broaden the field of the resource utilization of the CO₂ and consume the captured CO₂ timely to form a complete industry chain.

In view of the foregoing problems, it is necessary to develop a CO₂ capturing method for co-producing of the carbon monoxide and hydrogen.

### SUMMARY

The main purpose of the present invention is to provide a carbon dioxide capturing method and system for co-producing of carbon monoxide and hydrogen, to solve a problem of high capture cost and a single product of existing carbon dioxide capturing methods.

In order to achieve the foregoing purpose, in a first aspect, the present application provides a carbon dioxide capturing method for co-producing of carbon monoxide and hydrogen, including: performing, by using an alkaline solution, a capturing process on carbon dioxide in a target component, to obtain an aqueous solution containing a carbonate; performing, on the aqueous solution containing the carbonate, a first electrolytic process, to obtain hydrogen and an aqueous solution containing a bicarbonate; and performing, on an aqueous solution of the bicarbonate in the presence of a catalyst, a second electrolytic process, to obtain the carbon monoxide and the hydrogen, where the catalyst is selected as at least one component from a group consisting of an elementary substance of metal, alloy and compound of group VIII, group IB, group IIB, group IVA and lanthanide.

Further, a product of the first electrolytic process further includes first crude oxygen, the first crude oxygen includes a portion of carbon dioxide, and the carbon dioxide capturing method for co-producing of the carbon monoxide and the hydrogen further includes: purifying, by a portion of the aqueous solution containing the carbonate, the first crude oxygen, to obtain pure oxygen and the aqueous solution containing the bicarbonate; and performing, on the aqueous solution containing the bicarbonate, the first electrolytic process, to obtain an aqueous solution of the bicarbonate.

Further, in the first electrolytic process, voltage of an electrolytic cell ranges from 1.1V to 4V, a current density ranges from 500 A/m² to 8000 A/m², a hydrogen ion concentration (pH) of the aqueous solution containing the carbonate ranges from 10 to 14, and a concentration of carbonate in the aqueous solution containing the carbonate ranges from 1 mol/L to 4.5 mol/L.

Further, products of the first electrolytic process further includes a regenerated alkaline solution, and the carbon dioxide capturing method for co-producing of the carbon monoxide and the hydrogen further includes: taking at least a portion of the regenerated alkaline solution and/or at least a portion of a catholyte obtained in the second electrolytic process as the alkaline solution to participate in the capturing process.

Further, the at least a portion of the regenerated alkaline solution is performed a cooling treatment before participating in the capturing process.

Further, in the second electrolytic process, voltage of an electrolytic cell ranges from 100 V to 220 V, a current density ranges from 500 A/m² to 10000 A/m², a loading quantity of the catalyst ranges from 1 mg/cm² to 200 mg/cm², a pH of the aqueous solution containing the bicarbonate ranges from 8 to 13, and a concentration of the bicarbonate in an aqueous solution of the bicarbonate ranges from 1.5 mol/L to 3.8 mol/L.

Further, an operating temperature of the first electrolytic process ranges from 70°C to 95° C, and an operating temperature of the second electrolytic process ranges from 20°C to 90°C.

Further, the catalyst is selected as at least one component from a group consisting of aurum (Au), nickel (Ni), zinc (Zn), CuPb, CeO₂, and ZnO, and a loading quantity of the catalyst ranges from 30 mg/cm² to 80 mg/cm².

Further, products of the second electrolytic process further includes second crude oxygen, the second crude oxygen includes a portion of carbon dioxide, and the carbon dioxide capturing method for co-producing of the carbon monoxide and the hydrogen further includes: purifying, by a portion of the aqueous solution containing the carbonate, the second crude oxygen, to obtain the pure oxygen and the aqueous solution containing the bicarbonate.

Further, in a capturing process, a pressure is an atmospheric pressure, a concentration of the aqueous solution containing the carbonate ranges from 1 mol/L to 4.5 mol/L, and a pH ranges from to 13.

Further, in a purification process, a ratio of a molar quantity of bicarbonate ions to a total molar quantity of carbonate ions and the bicarbonate ions in the aqueous solution containing the bicarbonate ranges from 0.1: 1 to 1: 1.

Further, the carbon dioxide capturing method for co-producing of the carbon monoxide and the hydrogen further includes: taking a portion of the aqueous solution containing the carbonate to participate in a capturing process again.

Further, a molar ratio of the carbon monoxide to the hydrogen obtained in the second electrolytic process ranges from 0.1: 1 to 1: 1.

In another aspect, the present invention further provides a carbon dioxide capture system for co-producing of carbon monoxide and hydrogen which includes: a carbon dioxide capture apparatus, a first electrolytic apparatus and a second electrolytic apparatus. The carbon dioxide capture apparatus is provided with an inlet of an alkaline solution, an inlet of a target component and a discharge opening of an aqueous solution containing a carbonate. The first electrolytic apparatus is provided with an inlet of the aqueous solution containing the carbonate, a discharge opening of an aqueous solution of the bicarbonate and an outlet of hydrogen, and the discharge opening of the aqueous solution containing the carbonate is in communication with the aqueous solution containing the carbonate inlet. A catalyst is provided inside the second electrolytic apparatus, the first electrolytic apparatus is provided with an inlet of the aqueous solution of the bicarbonate and an outlet of cathode gas, and the outlet of the cathode gas is used for discharging the carbon monoxide and the hydrogen, where the catalyst is as at least one component from a group consisting of an elementary substance of metal, alloy and compound of group VIII, group IB, group IIB, group IVA and lanthanide.

Further, the first electrolytic apparatus is further provided with a discharge opening of first crude oxygen, the carbon dioxide capture system for co-producing of the carbon monoxide and the hydrogen further includes an oxygen purification apparatus. The oxygen purification apparatus is provided with an inlet of crude oxygen, an inlet of an alkaline absorbent and a discharge opening of the aqueous solution containing the bicarbonate, the inlet of the crude oxygen is in communication with an outlet of the first crude oxygen, and the discharge opening of the aqueous solution containing the bicarbonate is in communication with the inlet of an aqueous solution of the bicarbonate.

Further, the discharge opening of the aqueous solution containing the carbonate is separately in communication with the inlet of the alkaline absorbent and the inlet of the alkaline solution.

Further, the first electrolytic apparatus is further provided with a discharge opening of regenerated alkaline solution, and the discharge opening of the regenerated alkaline solution is in communication with the inlet of the alkaline solution inlet via a transport pipeline of the regenerated alkaline solution.

Further, the carbon dioxide capture system capable for co-producing of the carbon monoxide and the hydrogen is further provided with a buffering apparatus and a cooling apparatus, and the buffering apparatus and the cooling apparatus are sequentially arranged on the transport pipeline of the regenerated alkaline solution in a flowing direction of the regenerated alkaline solution.

Further, the second electrolytic apparatus is further provided with a discharge opening of cathode electrolyte and an outlet of second crude oxygen, the discharge opening of the cathode electrolyte is in communication with the inlet of the alkaline solution, and the outlet of the second crude oxygen is in communication with the inlet of the crude oxygen.

According to technical solutions of the present invention, the carbon dioxide is capable of being captured from the target component (such as air or combustion exhaust) by the foregoing method and being converted to the aqueous solution containing the carbonate, thereby achieving a purpose of reducing emission of the carbon dioxide. Through the first electrolytic process, the aqueous solution containing the carbonate is slightly electrolyzed, to make the carbonate be converted to the bicarbonate, and regeneration of the alkaline absorption solution is realized, and a portion of hydrogen is produced as a by-product. Under an action of the catalyst, the bicarbonate is performed a catalytic electrolysis reaction in the second electrolytic process to obtain the carbon monoxide and the hydrogen. By means of the above-mentioned method, the captured carbon dioxide may be consumed and utilized in a form of a synthesis gas, so that an application field of resource utilization of the carbon dioxide is further broadened. Meanwhile, a portion of the carbonate in the aqueous solution containing the carbonate is converted to the bicarbonate before the first electrolysis, so that power consumption and process cost is greatly reduced.

### BRIEF DESCRIPTION OF THE DRAWINGS

The drawings, which constitute a part of the present invention, are used for providing further understanding of the present invention. The illustrative embodiments of the present invention and the description thereof are used for explaining the present application, and do not constitute an improper limitation to the present invention. In the drawings:

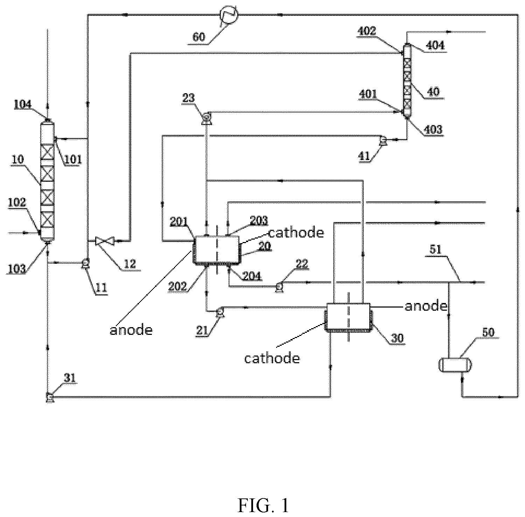

FIG. 1 is a schematic structural diagram of a typical carbon dioxide capture for co-producing of carbon monoxide and hydrogen according to the present application.

The foregoing drawings include the following reference symbols:
10. carbon dioxide capture apparatus; 101. inlet of alkaline solution; 102. inlet of target component; 103. discharge opening of aqueous solution containing carbonate; 104. discharge opening of gas on top of tower; 11. delivery pump of carbonate-containing aqueous solution; 12. flow regulating valve;
20. first electrolytic apparatus; 201. inlet of carbonate-containing aqueous solution; 202. discharge opening of aqueous solution of bicarbonate; 203. outlet of hydrogen; 204. discharge opening of regenerated alkaline solution; 21. delivery pump of anolyte of first electrolytic apparatus; 22. delivery pump of regenerated alkaline solution; 23. conveying fan of anode gas;
30. second electrolytic apparatus; 31. delivery pump of second electrolytic apparatus catholyte;
40. oxygen purification apparatus; 401. inlet crude oxygen; 402. inlet alkaline absorbents; 403. discharge opening of aqueous solution containing bicarbonate; 404. vent on top of tower; 41. delivery pump of liquid in bottom of purification tower;
50. buffering apparatus; 51. transport pipeline for external water supply;
60. cooling apparatus.

### DETAILED DESCRIPTION OF THE EMBODIMENTS

It should be noted that, in a case of no conflict, the embodiments in the present application and the features in the embodiments may be combined with each other. The present application will be described in detail below with reference to the embodiments.

As described in the background, existing carbon dioxide (CO₂) capturing methods have the problems of high capture cost and a single product. In order to solve the foregoing technical problem, the present application provides a carbon dioxide capturing method for co-producing of carbon monoxide and hydrogen (H₂). The carbon dioxide capturing method for co-producing of the carbon monoxide and the hydrogen includes: performing, by using an alkaline solution, a capturing process on carbon dioxide in a target component, to obtain an aqueous solution containing a carbonate; performing, on the aqueous solution containing the carbonate, a first electrolytic process, to obtain hydrogen and an aqueous solution containing a bicarbonate; and performing, on an aqueous solution of the bicarbonate in the presence of a catalyst, a second electrolytic process, to obtain the carbon monoxide and the hydrogen, where the catalyst is selected as at least one component from a group consisting of an elementary substance of metal, alloy and compound of group VIII, group IB, group IIB, group IVA and lanthanide.

According to the above-mentioned method, the carbon dioxide is capable of being captured from the target component (such as air or combustion exhaust) and is made to be converted to the aqueous solution containing the carbonate, so that a purpose of reducing emission of the carbon dioxide is achieved. Through the first electrolytic process, the aqueous solution containing the carbonate is slightly electrolyzed, to make the carbonate be converted to the bicarbonate, so that regeneration of the alkaline absorption solution is realized, and a portion of hydrogen is produced as a by-product. Under an action of the catalyst, the bicarbonate is performed a catalytic electrolysis reaction in the second electrolytic process to obtain the carbon monoxide and the hydrogen. By means of the above-mentioned method, the captured carbon dioxide may be consumed and utilized in a form of a synthesis gas, so that an application field of resource utilization of the carbon dioxide is further broadened. Meanwhile, a portion of the carbonate in the aqueous solution containing the carbonate is converted to the bicarbonate before the first electrolysis, so that power consumption and process cost is greatly reduced.

In a preferred embodiment, products of the first electrolytic process further includes first crude oxygen, the first crude oxygen includes a portion of carbon dioxide, and the carbon dioxide capturing method for co-producing of the carbon monoxide and the hydrogen further includes: purifying, by a portion of the aqueous solution containing the carbonate, the first crude oxygen, to obtain pure oxygen and the aqueous solution containing the bicarbonate; and performing, on the aqueous solution containing the bicarbonate, the first electrolytic process, to obtain an aqueous solution of the bicarbonate.

The first crude oxygen is purified by the aqueous solution containing the carbonate obtained in the capturing process of the carbon dioxide, so that the carbon dioxide entrained in the oxygen is capable of being recycled, and thus it is beneficial to improve capture efficiency of the carbon dioxide in the capturing process. Meanwhile, a portion of the carbonate in the aqueous solution containing the carbonate is made to be converted to the bicarbonate through the above-mentioned purification process, and it is used as an electrolyte in the first electrolytic process, so that power consumption in the first electrolytic process is capable of being reduced to a certain extent, thus energy consumption of a system is reduced finally, and thus cost of a whole process is reduced.

The aqueous solution containing the carbonate is made to be converted to the aqueous solution bicarbonate by the first electrolytic process. In a preferred embodiment, in the first electrolytic process, voltage of an electrolytic cell ranges from 1. 1V to 4V, a current density ranges from 500 A/m² to 8000 A/m², a hydrogen ion concentration (pH) of the aqueous solution containing the carbonate ranges from 10 to 14, and concentration of carbonate in the aqueous solution containing the carbonate ranges from 1 mol/L to 4.5 mol/L. The voltage of the electrolytic cell, the current density, the pH of the aqueous solution containing the carbonate and the concentration of the carbonate in the aqueous solution containing the carbonate include, but are not limited to, the above-mentioned ranges. It is beneficial to further improve a conversion rate of the bicarbonate by limiting them to the above-mentioned ranges.

In a preferred embodiment, products of the first electrolytic process further includes a regenerated alkaline solution, and the carbon dioxide capturing method for co-producing of the carbon monoxide and the hydrogen further includes: taking at least a portion of the regenerated alkaline solution and/or at least a portion of a catholyte obtained in the second electrolytic process as the alkaline solution to participate in the capturing process. A portion of the alkaline solution (the regenerated alkaline solution) is capable to be regenerated through the first electrolytic process, and it is taken as an absorbent for capturing in the capturing process of the carbon dioxide again to improve a utilization rate of a raw material in the whole process, so that it is beneficial to further reduce the cost.

Generally, the regenerated alkaline solution has a certain temperature after the first electrolytic process. In order to suppress the influence on the absorption of the carbon dioxide in the recycling process of the regenerated alkaline solution, preferably, the at least a portion of the regenerated alkaline solution is performed a cooling treatment before participating in the capturing process.

In a preferred embodiment, in the second electrolytic process, voltage of an electrolytic cell ranges from 100 V to 220 V, a current density ranges from 500 A/m² to 10000 A/m², a loading quantity of the catalyst ranges from 1 mg/cm² to 200 mg/cm², a pH of the aqueous solution containing the bicarbonate ranges from 8 to 13, and a concentration of bicarbonate in an aqueous solution of the bicarbonate ranges from 1.5 mol/L to 3.8 mol/L. The voltage of the electrolytic cell, the current density, the loading quantity of the catalyst, the pH of the aqueous solution of the bicarbonate, and the concentration of the bicarbonate in the bicarbonate aqueous solution include, but are not limited to, the above-mentioned ranges, and it is beneficial to further improve a yield of the carbon monoxide by limiting them to the above-mentioned ranges.

Preferably, an operating temperature of the first electrolytic process ranges from 70°C to 95°C, and an operating temperature of the second electrolytic process ranges from 20°C to 90°C. Since a temperature may affect efficiency of the electrolytic process to a certain extent, it is beneficial to further improve the yield of the carbon monoxide by limiting the operating temperatures of the first electrolytic process and the second electrolytic process to the above-mentioned ranges.

In order to further improve the yield and reactivity of the carbon monoxide, preferably, the catalyst is selected as at least one component from a group consisting of aurum (Au), nickel (Ni), zinc (Zn), CuPb, CeO₂, and ZnO, and a loading quantity of the catalyst ranges from 30 mg/cm² to 80 mg/cm².

The second electrolytic process also generates a certain quantity of crude oxygen (second crude oxygen), and the second crude oxygen includes a portion of carbon dioxide. In order to recycle the carbon dioxide in the second crude oxygen and improve a utilization rate of carbon element, preferably, the carbon dioxide capturing method for co-producing of the carbon monoxide and the hydrogen further includes: purifying, by a portion of the aqueous solution containing the carbonate, the second crude oxygen, to obtain the pure oxygen and the aqueous solution containing the bicarbonate.

In a preferred embodiment, in a capturing process, a pressure is an atmospheric pressure, a concentration of the aqueous solution containing the carbonate ranges from 1 mol/L to 4.5 mol/L, and a pH ranges from 10 to 13.

In a preferred embodiment, in a purification process, a ratio of a molar quantity of bicarbonate ions to a total molar quantity of carbonate ions and the bicarbonate ions in the aqueous solution containing the bicarbonate ranges from 0.1: 1 to 1:1. The ratio of the molar quantity of the bicarbonate ions to the total molar quantity of the carbonate ions and bicarbonate ions includes but is not limited to the above-mentioned range, and it is beneficial to further improve the yield of the carbon monoxide in the second electrolytic process by limiting them to the above-mentioned range. Since a portion of hydrogen may also be generated in the first electrolytic process, and it is co-mixed with the carbon monoxide and the hydrogen generated in the second electrolytic process, so that flexible adjustment of a proportion of the carbon monoxide and the hydrogen in the synthesis gas may be achieved.

Preferably, a molar ratio of the carbon monoxide to the hydrogen obtained in the second electrolytic process ranges from 0.1: 1 to 1: 1.

In a second aspect, the present application also provides a carbon dioxide capture system for co-producing of carbon monoxide and hydrogen which includes a carbon dioxide capture apparatus 10, a first electrolytic apparatus 20 and a second electrolytic apparatus 30. The carbon dioxide capture apparatus 10 is provided with an inlet of an alkaline solution 101, an inlet of a target component 102 and a discharge opening of an aqueous solution containing carbonate 103. The electrolytic apparatus is provided with an inlet of an aqueous solution containing carbonate 201, a discharge opening of an aqueous solution of the bicarbonate 202 and an outlet of hydrogen 203, and the discharge opening of the aqueous solution containing the carbonate 103 is in communication with the inlet of the aqueous solution containing the carbonate 201. A catalyst is provided inside the second electrolytic apparatus 30, and the first electrolytic apparatus 20 is provided with an inlet of an aqueous solution of the bicarbonate and an outlet of cathode gas. The outlet of the cathode gas is used for discharging the carbon monoxide and the hydrogen. The catalyst is selected as at least one component from a group consisting of an elementary substance of metal, alloy and compound of group VIII, group IB, group IIB, group IVA and lanthanide.

The carbon dioxide capture apparatus 10 is capable of capturing the carbon dioxide from the target component (such as air or combustion exhaust), and making it be converted to the aqueous solution containing the carbonate, to achieve a purpose of reducing emission of the carbon dioxide. The aqueous solution containing the carbonate is slightly electrolyzed through the first electrolytic apparatus 20, to make the carbonate be converted to the bicarbonate, so that regeneration of the alkaline absorption solution is realized, and a portion of hydrogen is produced as a by-product. Under an action of the catalyst, the bicarbonate undergoes a catalytic electrolysis reaction in the second electrolytic apparatus 30 to obtain the carbon monoxide and the hydrogen. By means of the above-mentioned capture system, the captured carbon dioxide may be consumed and utilized in a form of a synthesis gas, so that an application field of resource utilization of the carbon dioxide is further broadened. Meanwhile, a portion of the carbonate in the aqueous solution containing the carbonate is converted to the bicarbonate before the first electrolysis, so that power consumption and process cost is greatly reduced.

In a preferred embodiment, the first electrolytic apparatus 20 is further provided with a discharge opening of a first crude oxygen, the carbon dioxide capture system capable for co-producing of the carbon monoxide and the hydrogen further includes an oxygen purification apparatus 40. The oxygen purification apparatus 40 is provided with an inlet of crude oxygen 401, an inlet of an alkaline absorbent 402 and a discharge opening of the aqueous solution containing the bicarbonate 403. The inlet of the crude oxygen 401 is in communication with an outlet of the first crude oxygen, and the discharge opening of the aqueous solution containing the bicarbonate 403 is in communication with the inlet of an aqueous solution of the bicarbonate. In the oxygen purification apparatus 40, the first crude oxygen is purified by using the aqueous solution containing the carbonate obtained by the carbon dioxide capture apparatus 10, so that the carbon dioxide entrained by the oxygen is capable of being recycled, and thus facilitating improving capture efficiency of the carbon dioxide in a capturing process. Meanwhile, a portion of the carbonate in the aqueous solution containing the carbonate is capable of being converted to the bicarbonate through the above-mentioned purification process, it is used as an electrolyte in the first electrolytic apparatus 20, so that power consumption in the first electrolytic apparatus 20 is capable of being reduced to a certain extent, thus energy consumption of the system is finally reduced, and thus cost of a whole process is reduced.

In order to further improve a utilization rate of the raw material and reduce the process cost at the same time, preferably, the discharge opening of the aqueous solution containing the carbonate 103 is separately in communication with the inlet of the alkaline absorbent 402 and the inlet of the alkaline solution 101.

In order to further improve the utilization rate of the raw material and reduce the process cost at the same time, preferably, the first electrolytic apparatus 20 is further provided with a discharge opening of a regenerated alkaline solution 204, and the discharge opening of the regenerated alkaline solution 204 is in communication with the inlet of the alkaline solution 101 by a transport pipeline of the regenerated alkaline solution.

Preferably, the carbon dioxide capture system capable for co-producing of the carbon monoxide and the hydrogen is further provided with a buffering apparatus 50 and a cooling apparatus 60. The buffering apparatus 50 and the cooling apparatus 60 are sequentially arranged on the transport pipeline of the regenerated alkaline solution in a flowing direction of the regenerated alkaline solution. The concentration and pH of the regenerated alkaline solution may be adjusted by adding water to the buffering apparatus 50 additionally. Generally, the regenerated alkaline solution discharged after the first electrolysis has a certain temperature. By providing the cooling apparatus 60, it is beneficial to suppress the influence on the absorption of the carbon dioxide in the recycling process of the regenerated alkaline solution.

The second electrolytic apparatus 30 will also discharge a certain quantity of crude oxygen (a second crude oxygen), and the second crude oxygen includes a portion of carbon dioxide. In order to recycle the carbon dioxide in the second crude oxygen and improve a utilization rate of carbon element, the second electrolytic apparatus 30 is further provided with a discharge opening of cathode electrolyte and an outlet of the second crude oxygen, the discharge opening of the cathode electrolyte is in communication with the inlet of the alkaline solution 101, and the outlet of the second crude oxygen is in communication with the inlet of the crude oxygen 401.

The present application is further described in detail below with reference to specific embodiments, and the embodiments should not be understood as a limitation of a protection scope of the present application.

### Embodiment 1

A carbon dioxide capturing method for co-producing of carbon monoxide and hydrogen includes following steps.

In a carbon dioxide capture apparatus 10, a capturing process of the carbon dioxide includes: an alkaline solution is transported to the carbon dioxide capture apparatus 10 through an inlet of the alkaline solution 101, and carbon dioxide in a target component is captured by the alkaline solution to obtain an aqueous solution containing a carbonate after the target component enters the carbon dioxide capture apparatus 10 through an inlet of the target component. The target component is air, a volume fraction of the carbon dioxide is 400 ppm, the alkaline solution is an aqueous solution of KOH with a concentration of 1.1 mol/L, and the aqueous solution containing the carbonate is an aqueous solution of K₂CO₃ with a concentration of 2.1 mol/Land a pH of 13.6. The aqueous solution containing the carbonate is discharged through a discharge opening of the aqueous solution containing the carbonate 103, and the uncaptured gas is discharged through a discharge opening of gas on the top of a tower 104.

The aqueous solution containing the carbonate enters the first electrolytic apparatus 20 through an inlet of the aqueous solution containing the carbonate 201 under control of a delivery pump of the aqueous solution containing the carbonate 11 and a flow regulating valve 12. A first electrolytic process includes: the above-mentioned aqueous solution of the K₂CO₃ is transported to an electrolytic cell, a voltage of the electrolytic cell is controlled to be 2.6V, and a current density is controlled to be 1560 A/m². An aqueous solution of KOH (a regenerated alkaline solution) and hydrogen are obtained at a cathode, the hydrogen is discharged from an outlet of hydrogen 203, and the aqueous solution of the KOH is discharged through a discharge opening of the regenerated alkaline solution 204. The aqueous solution of the KOH is transported to a buffering apparatus 50 through a delivery pump of the regenerated alkaline solution 22, water is added into the buffering apparatus 50 through a transport pipeline for external water supply 51 to adjust a pH thereof, and then it is returned to the carbon dioxide capture apparatus 10 for recycling through the inlet of the alkaline solution 101 after being cooled by a cooling apparatus 60. An aqueous solution of KHCO₃ (an aqueous solution containing the bicarbonate) with a concentration of 2.4 mol/L is obtained at an anode, and meanwhile, first crude oxygen including CO₂ having a dry basis volume fraction of 42% is obtained. The above-mentioned aqueous solution containing the bicarbonate is discharged through a discharge opening of the aqueous solution containing the bicarbonate 403. The first crude oxygen is discharged through an outlet of the first crude oxygen.

It is transported to the second electrolytic apparatus 30 through a delivery pump of anolyte 21 of the first electrolytic apparatus 20. A second electrolytic process includes: the aqueous solution of the KHCO₃ obtained at the anode in the first electrolytic process is transported to an electrolytic cell, a voltage of the electrolytic cell is controlled to be 150 V, and a current density is controlled to be 2500 A/m². An electrolytic temperature is controlled to be 45°C, a loading quantity of an ionic membrane catalyst in the electrolytic cell is controlled to be 36 mg/cm², and the used catalyst is Au. A synthesis gas having a molar ratio of CO to H₂ of 0.49: 1 and catholyte is obtained at the cathode, and second crude oxygen including CO₂ with a dry basis volume fraction of 9% is obtained at the anode. The second crude oxygen is discharged through an outlet of the second crude oxygen, and the catholyte is returned to the carbon dioxide capture apparatus 10 by a delivery pump of the catholyte 31 of a second electrolytic apparatus 30 via the inlet of the alkaline solution.

The first crude oxygen and the second crude oxygen is transported to an oxygen purification apparatus 40 by a conveying fan of anode gas 23 via an inlet of crude oxygen 401. An alkaline absorbent (at least a portion of the carbonate aqueous solution obtained in the capturing process of the carbon dioxide) flows into the oxygen purification apparatus 40 via an inlet of the alkaline absorbent 402. The purification process includes: before the portion of the carbonate aqueous solution obtained in the capturing process of the carbon dioxide is electrolyzed for the first time, the first crude oxygen and the second crude oxygen is purified by using the portion of the aqueous solution of the carbonate to obtain an aqueous solution containing the bicarbonate and the purified oxygen. A ratio of a molar quantity of bicarbonate ions to a total molar quantity of carbonate ions and the bicarbonate ions in the aqueous solution containing the bicarbonate is 0.23: 1. This aqueous solution containing the bicarbonate is transported to an electrolytic cell of the first electrolytic apparatus 20 and is performed an electrolytic operation by a delivery pump of liquid in the bottom of a purification tower 41 after being discharged through a discharge opening of the aqueous solution containing the bicarbonate 403. The oxygen is discharged through a vent on the top the tower 404.

In this embodiment, according to the conditions described, a capture rate of the CO₂ may be 51%. By setting the purification process, a recycling rate of the captured CO₂ may be increased from about 70% to about 98.6% compared with a condition that a first electrolysis is directly performed on the carbonate solution. Meanwhile, the K₂CO₃ in the portion of the carbonate solution obtained in the capturing process of the carbon dioxide is converted to the KHCO₃ by using the purification process, to make energy consumption of the first electrolysis is reduced by about 13.6%. By the second electrolytic process, a conversion rate per-pass of the carbon dioxide is 28.7%. Meanwhile, the H₂ obtained by the first electrolysis may be co-mixed with the synthesis gas obtained by the second electrolysis according to a requirement of a downstream, so that a carbon-hydrogen ratio of the final synthesis gas is adjustable within a certain range, and thus flexible adjustment is achieved.

### Embodiment 2

A difference from the Embodiment 1 is that a catalyst is Zn.

By the second electrolytic process, the conversion rate per-pass of the carbon dioxide is 15.3%.

### Embodiment 3

A difference from the Embodiment 1 is that a catalyst is Ni.

By the second electrolytic process, the conversion rate per-pass of the carbon dioxide is 16.1%.

### Embodiment 4

A difference from the Embodiment 1 is that a catalyst is CuPb.

By the second electrolytic process, the conversion rate per-pass of the carbon dioxide is 24.6%.

### Embodiment 5

A difference from the Embodiment 1 is that a catalyst is CeO₂.

By the second electrolytic process, the conversion rate per-pass of the carbon dioxide is 22.3%.

### Embodiment 6

A difference from the Embodiment 1 is that a catalyst is ZnO.

By the second electrolytic process, the conversion rate per-pass of carbon dioxide is 19.4%.

### Embodiment 7

A difference from the Embodiment 1 is that a loading quantity of the catalyst is 30 mg/cm².

By the second electrolytic process, the conversion rate per-pass of the carbon dioxide is 24.6%.

### Embodiment 8

A difference from the Embodiment 1 is that a loading quantity of the catalyst is 80 mg/cm².

By the second electrolytic process, the conversion rate per-pass of the carbon dioxide is 29.8%.

### Embodiment 9

A difference from the Embodiment 1 is that a loading quantity of the catalyst is 16 mg/cm².

By the second electrolytic process, the conversion rate per-pass of the carbon dioxide is 20.4%.

From the above-mentioned description, it may be seen that the above-mentioned embodiments of the present application achieve the following technical effects:
(1) According to the CO₂ capture and utilization system and method for co-co-producing of the CO and the H₂ provided by the present application, the crude O₂ is purified by using the aqueous solution of the carbonate from the CO₂ absorption tower, to recycle the CO₂ entrained by the O₂, so that capture efficiency of the system is ensured. Meanwhile, a portion of the carbonate in the aqueous solution of the carbonate is converted to the bicarbonate, and then it is transported to the electrolytic cell for electrolysis, so that power consumption of the electrolytic cell may be reduced to a certain extent, and energy consumption of the system is finally reduced.
(2) According to the CO₂ capture and utilization system and method for co-producing of the CO and the H₂ provided by the present application, the captured CO₂ is finally converted to the synthesis gas of the CO and the H₂ by reacting with water through the two-stages of catalytic electrolysis, so that the captured CO₂ may be consumed in a form of the synthesis gas, and an application field of the resource utilization of the CO₂ is further broadened.
(3) According to the CO₂ capture and utilization system and method for co-producing of the CO and the H₂ provided by the present application, the alkaline absorption solution is regenerated in a first-stage electrolysis manner, and a portion of pure H₂ is generated as a by-product, and the obtained H₂ may be directly sold as a product, or may be co-mixed with the synthesis gas of the CO and the H₂ obtained by the second-stage electrolytic cell according to a requirement of a downstream to achieve flexible adjustment of a carbon-hydrogen ratio in the synthesis gas.

It should be noted that the terms "first", "second" and the like in the specification and claims of the present application are used to distinguish similar objects, and are not necessarily used to describe a specific order or sequence. It should be understood that the terms used in this way may be interchangeable under appropriate circumstances, so that the embodiments of the present application described herein are capable of being implemented in an order other than those described herein.

The foregoing is merely preferred embodiments of the present application and are not intended to limit the present application, and for a person skilled in the art, the present application may have various modifications and changes. Any modification, equivalent replacement, or improvement made within the spirit and principle of the present application shall fall within the protection scope of the present application.

## Claims

1. A carbon dioxide capturing method for co-producing of carbon monoxide and hydrogen, comprising:
performing, by using an alkaline solution, a capturing process on carbon dioxide in a target component, to obtain an aqueous solution containing a carbonate;
performing, on the aqueous solution containing the carbonate, a first electrolytic process, to obtain hydrogen and an aqueous solution containing a bicarbonate; and
performing, on the aqueous solution containing the bicarbonate in the presence of a catalyst, a second electrolytic process, to obtain the carbon monoxide and the hydrogen, wherein the catalyst is selected as at least one component from a group consisting of an elementary substance of metal, alloy and compound of group VIII, group IB, group IIB, group IVA and lanthanide.

2. The carbon dioxide capturing method for co-producing of the carbon monoxide and the hydrogen according to claim 1, wherein products of the first electrolytic process further comprises first crude oxygen, the first crude oxygen comprises a portion of carbon dioxide, and the carbon dioxide capturing method for co-producing of the carbon monoxide and the hydrogen further comprises:
purifying, by a portion of the aqueous solution containing the carbonate, the first crude oxygen, to obtain pure oxygen and the aqueous solution containing the bicarbonate; and
performing, on the aqueous solution containing the bicarbonate, the first electrolytic process, to obtain an aqueous solution of the bicarbonate.

3. The carbon dioxide capturing method for co-producing of the carbon monoxide and the hydrogen according to claim 1 or claim 2, wherein in the first electrolytic process, a voltage of an electrolytic cell ranges from 1.1V to 4V, a current density ranges from 500 A/m² to 8000 A/m², a hydrogen ion concentration (pH) of the aqueous solution containing the carbonate ranges from 10 to 14, and a concentration of the carbonate in the aqueous solution containing the carbonate ranges from 1 mol/L to 4.5 mol/L.

4. The carbon dioxide capturing method for co-producing of the carbon monoxide and the hydrogen according to claim 3, wherein products of the first electrolytic process further comprises a regenerated alkaline solution, and the carbon dioxide capturing method for co-producing of the carbon monoxide and the hydrogen further comprises: taking at least a portion of the regenerated alkaline solution and/or at least a portion of a catholyte obtained in the second electrolytic process as the alkaline solution to participate in the capturing process.

5. The carbon dioxide capturing method for co-producing of the carbon monoxide and the hydrogen according to claim 4, wherein the at least a portion of the regenerated alkaline solution is performed a cooling treatment before participating in the capturing process.

6. The carbon dioxide capturing method for co-producing of the carbon monoxide and the hydrogen according to claim 3, wherein in the second electrolytic process, a voltage of an electrolytic cell ranges from 100V to 220V, a current density ranges from 500 A/m² to 10000 A/m², a loading quantity of the catalyst ranges from 1 mg/cm² to 200 mg/cm², a pH of the aqueous solution the bicarbonate ranges from 8 to 13, and a concentration of the bicarbonate in an aqueous solution of the bicarbonate ranges from 1.5 mol/L to 3.8 mol/L.

7. The carbon dioxide capturing method for co-producing of the carbon monoxide and the hydrogen according to claim 6, wherein an operating temperature of the first electrolytic process ranges from 70°C to 95°C, and an operating temperature of the second electrolytic process ranges from 20°C to 90°C.

8. The carbon dioxide capturing method for co-producing of the carbon monoxide and the hydrogen according to claim 3, wherein the catalyst is selected as at least one component from a group consisting of aurum (Au), nickel (Ni), zinc (Zn), CuPb, CeO₂, and ZnO, and a loading quantity of the catalyst ranges from 30 mg/cm² to 80 mg/cm².

9. The carbon dioxide capturing method for co-producing of the carbon monoxide and the hydrogen according to claim 2, wherein products of the second electrolytic process further comprises second crude oxygen, the second crude oxygen comprises a portion of carbon dioxide, and the carbon dioxide capturing method for co-producing of the carbon monoxide and the hydrogen further comprises:
purifying, by a portion of the aqueous solution containing the carbonate, the second crude oxygen, to obtain the pure oxygen and the aqueous solution containing the bicarbonate.

10. The carbon dioxide capturing method for co-producing of the carbon monoxide and the hydrogen according to claim 1, wherein in a capture process, a pressure is an atmospheric pressure, a concentration of the aqueous solution containing the carbonate ranges from 1 mol/L to 4.5 mol/L, and a pH ranges from 10 to 13.

11. The carbon dioxide capturing method for co-producing of the carbon monoxide and the hydrogen according to claim 2, wherein in a purification process, a ratio of a molar quantity of bicarbonate ions to a total molar quantity of carbonate ions and the bicarbonate ions in the aqueous solution containing the bicarbonate ranges from 0.1:1 to 1: 1.

12. The carbon dioxide capturing method for co-producing of the carbon monoxide and the hydrogen according to claim 10, wherein the carbon dioxide capturing method for co-producing of the carbon monoxide and the hydrogen further comprises: taking a portion of the aqueous solution containing the carbonate to participate in the capturing process again.

13. The carbon dioxide capturing method for co-producing of the carbon monoxide and the hydrogen according to claim 1, wherein a molar ratio of the carbon monoxide to the hydrogen obtained in the second electrolytic process ranges from 0.1:1 to 1:1.

14. A carbon dioxide capture system for co-producing of carbon monoxide and hydrogen, comprising:
a carbon dioxide capture apparatus (10), the carbon dioxide capture apparatus (10) being provided with an inlet of an alkaline solution (101), an inlet of a target component (102) and a discharge opening of an aqueous solution containing a carbonate (103);
a first electrolytic apparatus (20), the first electrolytic apparatus being provided with an inlet of the aqueous solution containing the carbonate (201), a discharge opening of an aqueous solution of a bicarbonate (202) and an outlet of hydrogen (203), and the discharge opening of the aqueous solution containing the carbonate (103) being in communication with the inlet of the aqueous solution containing the carbonate (201); and
a second electrolytic apparatus (30), a catalyst being provided inside the second electrolytic apparatus (30), the first electrolytic apparatus (20) being provided with an inlet of the aqueous solution of the bicarbonate and an outlet of cathode gas, the outlet of the cathode gas being used for discharging the carbon monoxide and the hydrogen, wherein the catalyst is selected as at least one component from a group consisting of an elementary substance of metal, alloy and compound of group VIII, group IB, group IIB, group IVA and lanthanide.

15. The carbon dioxide capture system for co-producing of the carbon monoxide and the hydrogen according to claim 14, wherein the first electrolytic apparatus (20) is further provided with a discharge opening of first crude oxygen, the carbon dioxide capture system for co-producing of the carbon monoxide and the hydrogen further comprises an oxygen purification apparatus (40), the oxygen purification apparatus (40) is provided with an inlet of crude oxygen (401), an inlet of an alkaline absorbent (402) and a discharge opening of the aqueous solution containing the bicarbonate (403), the inlet of the crude oxygen (401) is in communication with an outlet of the first crude oxygen, and the discharge opening of the aqueous solution containing the bicarbonate (403) is in communication with the inlet of an aqueous solution of the bicarbonate.

16. The carbon dioxide capture system for co-producing of the carbon monoxide and the hydrogen according to claim 15, wherein the discharge opening of the aqueous solution containing the carbonate (103) is separately in communication with the inlet of the alkaline absorbent (402) and the inlet of the alkaline solution (101).

17. The carbon dioxide capture system for co-producing of the carbon monoxide and the hydrogen according to claim 15, wherein the first electrolytic apparatus (20) is further provided with a discharge opening of a regenerated alkaline solution (204), and the discharge opening of the regenerated alkaline solution (204) is in communication with the inlet of the alkaline solution (101) via a transport pipeline of the regenerated alkaline solution.

18. The carbon dioxide capture system for co-producing of the carbon monoxide and the hydrogen according to claim 17, wherein the carbon dioxide capture system for co-producing of the carbon monoxide and the hydrogen is further provided with a buffering apparatus (50) and a cooling apparatus (60), and the buffering apparatus (50) and the cooling apparatus (60) are sequentially arranged on the transport pipeline of the regenerated alkaline solution in a flowing direction of the regenerated alkaline solution.

19. The carbon dioxide capture system for co-producing of the carbon monoxide and the hydrogen according to claim 17, wherein the second electrolytic apparatus (30) is further provided with a discharge opening of cathode electrolyte and an outlet of second crude oxygen, the discharge opening of the cathode electrolyte discharge opening is in communication with the inlet of the alkaline solution (101), and the outlet of the second crude oxygen is in communication with the inlet of the crude oxygen (401).
